# EUROPEAN PATENT APPLICATION

(11) **EP 3 901 489 A1**
(43) Date of publication of application: **27.10.2021**
(21) Application number: 19897750.6
(22) Date of filing: 17.12.2019
(51) Int. Cl.: F16H 25/20, F16H 25/24, B62D 7/09, B62D 7/18, B62D 5/04

(54) **HUB UNIT HAVING STEERING FUNCTION AND VEHICLE PROVIDED WITH HUB UNIT**

(30) Priority: 20.12.2018 JP 2018237953
(71) Applicant: NTN Corporation, Osaka-shi, Osaka 550-0003 (JP)
(72) Inventor: OOBA, Hirokazu, Iwata-shi, Shizuoka 438-8510 (JP); UTSUNOMIYA, Satoshi, Iwata-shi, Shizuoka 438-8510 (JP); OHATA, Yusuke, Iwata-shi, Shizuoka 438-8510 (JP)
(74) Representative: Maikowski & Ninnemann Patentanwälte Partnerschaft mbB
(86) International application number: PCT/JP2019/049444
(87) International publication number: WO 2020/129988

(57) **Abstract**

Provided is a steering function equipped hub unit (1) including: a hub unit body (2); a unit support member (3) configured to be provided to a knuckle (6) and to support the hub unit body (2) such that the hub unit body is rotatable about a turning axis (A) extending in a vertical direction; and a steering actuator (5) configured to rotate the hub unit body (2) about the turning axis (A), wherein the steering actuator (5) includes a motor (26) and a linear motion mechanism (25) configured to convert a rotary output from the motor (26) into a linear motion, the linear motion mechanism (25) includes a feed screw mechanism (33) of a sliding screw type including a nut part (36) and a threaded shaft (36), and a surface hardening layer is provided on at least a threaded surface of one or both of the nut part (35) and the threaded shaft (36).

## Description

### CROSS REFERENCE TO THE RELATED APPLICATION

This application is based on and claims Convention priority to Japanese patent application No. 2018-237953, filed December 20, 2018, the entire disclosure of which is herein incorporated by reference as a part of this application.

### BACKGROUND OF THE INVENTION

### (Field of the Invention)

The present invention relates to a hub unit having a steering function (steering function equipped hub unit) and a vehicle including the same, as well as to a technology of controlling left and right wheels to an appropriate steering angle in accordance with a driving condition to improve fuel economy and enhance stability and safety of driving.

### (Description of Related Art)

General vehicles such as automobiles include a steering wheel mechanically connected to a steering device, the steering device having two left and right ends connected to left and right wheels through tie rods. Therefore, turning angles of the left and right wheels in accordance with an operation of the steering wheel are defined by an initial setting.

Known vehicle geometries include: (1) "parallel geometry" in which left and right wheels have a same turning angle; and (2) "Ackermann geometry" in which an inner wheel in turning is turned by a larger wheel angle than that of an outer wheel in turning so as to have a single center of turning.

In Ackermann geometry, a difference in turning angles of the left and right wheels is set so that the respective wheels turn about a single common point so as to smoothly turn the vehicle when turning in a low-speed range where a negligible centrifugal force acts on the vehicle. In contrast, when turning in a high-speed range where a centrifugal force is not negligible, parallel geometry is preferred to Ackermann geometry because it is desirable that the wheels generate a cornering force in a direction in which the centrifugal force is counterbalanced.

As mentioned above, since a steering device of a general vehicle is mechanically connected to wheels, the steering device can usually assume only a single fixed steering geometry and is often configured in an intermediate geometry between Ackermann geometry and parallel geometry. In such a case, however, the turning angle of the outer wheel becomes excessively large in a low-speed range due to an insufficient difference in the turning angles of the left and right wheels, whereas the turning angle of the inner wheel becomes excessively large in a high-speed range. Thus, where there is unnecessarily unbalanced distribution of a wheel lateral force between the inner and outer wheels (inner wheel and outer wheel), running resistance may be increased, leading to worsening of fuel economy and early wear of the tires. Further, there is another problem that the inner and outer wheels cannot be effectively used, causing deterioration in smooth cornering. To address these problems, Patent Documents 1, 2, 3 provide mechanisms capable of changing steering geometries.

### [Related Document]

### [Patent Document]

[Patent Document 1] JP Laid-open Patent Publication No. 2009-226972
[Patent Document 2] DE Patent Publication No. 102012206337
[Patent Document 3] JP Laid-open Patent Publication No. 2014-061744

In the mechanism as described in Patent Document 1, positions of a knuckle arm and a joint part are relatively changed in order to change the steering geometries. However, it is extremely difficult to install a motor actuator that can provide such a large force that the vehicle geometries can be changed in such parts due to space constraints. In addition, a change in the positions of the knuckle arm and the joint would only cause a small change in the wheel angles, it is necessary to greatly change, that is, to greatly move the positions of the knuckle arm and the joint in order to obtain a large effect.

In the mechanism as described in Patent Document 2, use of two motors not only increases costs because of the increased number of the motors, but also complicates the control.

The mechanism as described in Patent Document 3 can only be applied to four-wheel independent turning vehicles. Also, in this mechanism, a hub bearing is supported in a cantilever manner with respect to a turning shaft, which may possibly lead to reduction in rigidity, so that a steering geometry could be changed due to generation of an excessive g-force during driving.

Further, where a reduction gear is provided on the turning shaft, large power would be required. Therefore, a large motor should be provided, which in turn makes it difficult to dispose the entire motor in an inner peripheral part of a wheel. Also, where a reduction gear having a large reduction ratio is provided, responsiveness would be deteriorated.

Since a mechanism having a conventional supplementary steering function as described above is intended to arbitrarily change a toe angle or a camber angle of a wheel in a vehicle, the mechanism requires multiple motors and multiple speed reduction mechanisms and thus has a complicated configuration. Also, it is necessary to increase the size of the mechanism in order to ensure rigidity, resulting in an increased weight of the mechanism.

Furthermore, where a king pin coincides with a turning axis of a mechanism having a supplementary steering function, constituent components are disposed rearward (on a vehicle body side) in the hub unit, so that the entire mechanism has a larger size and an increased weight.

In addition, it is necessary to reduce the size of the respective components in order to accommodate the mechanism having the steering function within a limited space inside a wheel, which may possibly result in insufficient strength of the respective parts. In particular, abnormality is most likely to occur in a trapezoidal screw which directly receives a large reaction force from a road surface. Where the trapezoidal screw has abnormality, it becomes difficult to reliably transmit power to the hub bearing and to reliably prevent a reaction force from the tire in the steering actuator.

### SUMMARY OF THE INVENTION

An object of the present invention is to provide a steering function equipped hub unit which allows a part of the steering function equipped hub unit to be accommodated within a limited space inside a wheel and ensures durability, strength, and reliability of a feed screw mechanism of a linear motion mechanism, as well as a vehicle including the same.

A steering function equipped hub unit according to the present invention includes:
a hub unit body having a hub bearing configured to support a wheel;
a unit support member configured to be provided to a chassis frame component of a suspension system and to support the hub unit body such that the hub unit body is rotatable about a turning axis extending in a vertical direction; and
a steering actuator configured to rotate the hub unit body about the turning axis, wherein
the steering actuator includes a rotational driving source and a linear motion mechanism configured to convert a rotary output from the rotational driving source into a linear motion,
the linear motion mechanism includes a feed screw mechanism of a sliding screw type including a nut part and a threaded shaft, and
a surface hardening layer is provided on at least a threaded surface of one or both of the nut part and the threaded shaft.

According to this constitution, the hub unit body including the hub bearing configured to support a wheel can be freely rotated about the turning axis by the steering actuator. This makes it possible to steer a steered wheel or a non-steered wheel by a small angle in addition to normal steering of the steered wheel. Thus, the steering geometry can be changed during turning, so that driving stability of a vehicle can be improved. Even when driving straight, adjustment can be made by adapting toe angles in accordance with a situation so as to reduce running resistance and thereby prevent deterioration of fuel economy during driving at low speed, and to ensure driving stability during driving at high speed.

Thus, in order to control the behavior of the vehicle, it is necessary to accurately control turning angles of wheels and to reduce the size of the steering function equipped hub unit such that the hub unit can be installed within a limited space inside a wheel.

The hub bearing is configured to be rotated about the turning axis extending in the vertical direction by the steering actuator. The steering actuator includes the linear motion mechanism configured to convert a rotary output from the rotational driving source into a linear motion, and the linear motion mechanism includes the feed screw mechanism of the sliding screw type such as a trapezoidal screw. The linear motion mechanism makes it possible to steer the hub bearing, with an actuated position located at an end portion of e.g. an arm part distant from the turning axis of the hub bearing in a radial direction.

In such a case, in order to reduce the entire size, it is necessary to minimize a distance from the turning axis to the end portion of the arm part. Reduction of the distance, however, results in increased load acting on the feed screw mechanism of the linear motion mechanism in the steering actuator, which may lead to reduction in durability or cause defects such as deformation.

Further, since an external force from the tire due to vibration and turning is repeatedly applied to the steering function equipped hub unit during driving, the feed screw mechanism of the linear motion mechanism is also required to have high fatigue strength.

Accordingly, the feed screw mechanism of the linear motion mechanism is required to have high durability as well as high fatigue strength.

Particularly, in this constitution, the surface hardening layer is provided on at least the threaded surface of one or both of the nut part and the threaded shaft, so that the hardness of the threaded surface can be improved to enhance wear resistance without increasing the size of the feed screw mechanism. Further, surface hardening of the threaded surface can improve strength of the surface where a fatigue crack is initiated, and introduce a large compressive residual stress on the surface, so that fatigue strength can be improved. This makes it possible to achieve high shock resistance against an impulsive external force from a tire due to an obstacle or the like on the road surface as well as high fatigue strength against external forces repeatedly inputted from the tire.

Thus, it is possible to reduce the size of the steering function equipped hub unit such that a part of the steering function equipped hub unit is accommodated within a limited space inside a wheel, and to ensure durability, strength, and reliability of the feed screw mechanism of the linear motion mechanism.

The nut part and the threaded shaft may be made of a thermal refining material of steel containing 0.35% to 0.55% of carbon (0.35% or higher to 0.55% or lower of carbon). Use of such a thermal refining material makes it possible to improve durability of the feed screw mechanism. It should be noted that although the thermal refining material of steel has a hardened part at least near its surface due to thermal refining (i.e., quenching and tempering), the hardened part is not considered as the surface hardening layer provided on at least the threaded surface of one or both of the nut part and the threaded shaft in the present invention.

The thermal refining material of steel without the surface hardening layer provided thereon may have a hardness (hereinafter referred to as a base material hardness of the thermal refining material of steel) in a range from HRC 20 to HRC 30 (HRC 20 or higher to HRC 30 or lower). In a test for determining durability on thermal refining materials of steel having different base material hardness, desired durability was achieved where the thermal refining material of steel has a base material hardness in a range from HRC 20 to HRC 30.

The surface hardening layer may be formed on the threaded surface by nitriding or salt bath soft nitriding. In this case, a nitrided product has improved wear resistance thanks to hardness of the surface layer on the threaded surface. Further, since the nitrided product has been processed at lower processing temperature than that of a surface induction hardened product or the like, the nitrided product has a smaller absolute value of thermal expansion and has smaller deformation because the nitriding process does not involve transformation of steel. Thus, dimensional accuracy of the threaded surface can be maintained at a high level.

The surface hardening layer may be formed on the threaded surface by electroless nickel plating. In this case, dimensional accuracy of the threaded surface can be maintained at a high level because the electroless nickel plated layer has a uniform thickness on the threaded surface.

The surface hardening layer may be formed on the threaded surface by phosphate coating. In this case, dimensional accuracy of the threaded surface can be maintained at a high level because the coating can be formed by reaction of raw materials per se. Further, the phosphate coating improves lubricity of the threaded surface.

The surface hardening layer may be provided on at least the threaded surface of only one of the nut part and the threaded shaft, and the surface hardening layer may have a surface hardness in a range from Hv 700 to Hv 900 (Hv 700 or higher to Hv 900 or lower). In this case, a suitable difference in hardness is generated between the threaded surface of the nut part and the threaded surface of the threaded shaft, so that durability of the feed screw mechanism can be surely improved.

A vehicle according to the present invention includes steering function equipped hub units having any of the above constitutions according to the present invention, the steering function equipped hub units supporting front wheels, or rear wheels, or all of the front wheels and the rear wheels.

Therefore, the effects as described above for the steering function equipped hub unit according to the present invention can be obtained. The front wheels generally serve as steered wheels, and application of the steering function equipped hub units according to the present invention to the steered wheels makes it possible to effectively adjust toe angles during driving. The rear wheels generally serve as non-steered wheels, and application of the hub units to the non-steered wheels makes it possible to reduce a minimum turning radius of the vehicle when turning at low speed by slightly steering the non-steered wheels.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,
Fig. 1 is a front sectional view illustrating a steering function equipped hub unit according to a first embodiment of the present invention and surrounding features;
Fig. 2 is a plan sectional view illustrating the steering function equipped hub unit and the surrounding features;
Fig. 3 is a perspective view illustrating an outer appearance of the steering function equipped hub unit;
Fig. 4 is a side view of the steering function equipped hub unit;
Fig. 5 is a plan view of the steering function equipped hub unit;
Fig. 6 is a sectional view along line VI-VI of Fig. 4;
Fig. 7 is a sectional view along line VII-VII of Fig. 5;
Fig. 8 is a front sectional view of a linear motion mechanism of the steering function equipped hub unit;
Fig. 9 shows a relation between base material hardness and durability;
Fig. 10a is an enlarged sectional view of a main part of the linear motion mechanism during operation;
Fig. 10b is an enlarged sectional view of the main part of the linear motion mechanism upon a reverse input;
Fig. 11 is a schematic plan view of an example of a vehicle including steering function equipped hub units;
Fig. 12 is a schematic plan view of another example of a vehicle including steering function equipped hub units; and
Fig. 13 is a schematic plan view of yet another example of a vehicle including steering function equipped hub units.

### DESCRIPTION OF THE EMBODIMENTS

### First Embodiment

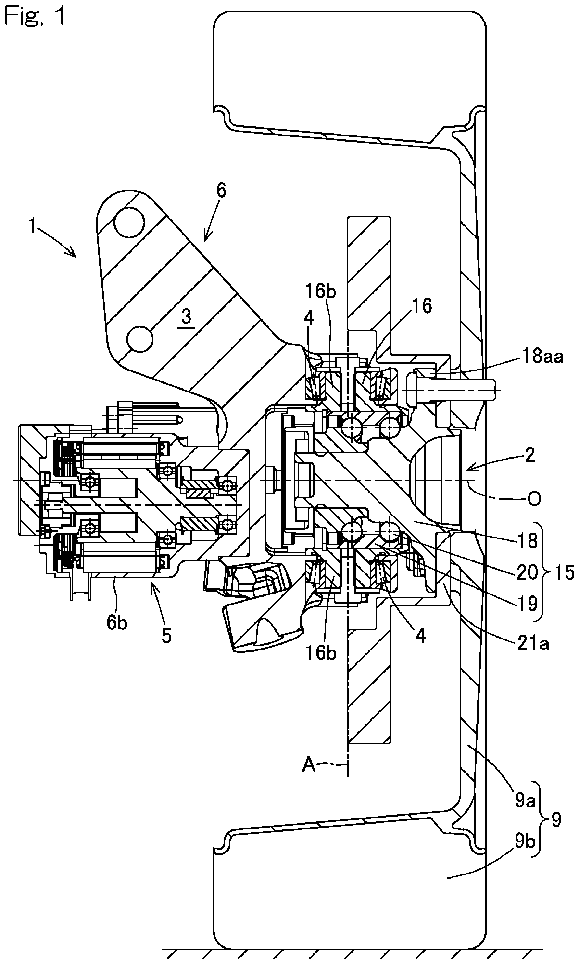

A steering function equipped hub unit according to a first embodiment of the present invention will be described with reference to Fig. 1 to Fig. 11.

### Schematic Structure of Steering Function Equipped Hub Unit 1

As shown in Fig. 1, the steering function equipped hub unit 1 includes: a hub unit body 2, a unit support member 3, rotation-permitting support components 4, and a steering actuator 5. The unit support member 3 is integrally provided to a knuckle 6, which is a chassis frame component. The steering actuator 5 is disposed on an inboard side with respect to the unit support member 3, and the hub unit body 2 is disposed on an outboard side with respect to the unit support member 3. It should be noted that the term "outboard side" refers to an outer side of a vehicle in a vehicle widthwise direction in a state where the steering function equipped hub unit 1 is mounted in the vehicle, and the term "inboard side" refers to a side closer to a center of the vehicle in the vehicle widthwise direction.

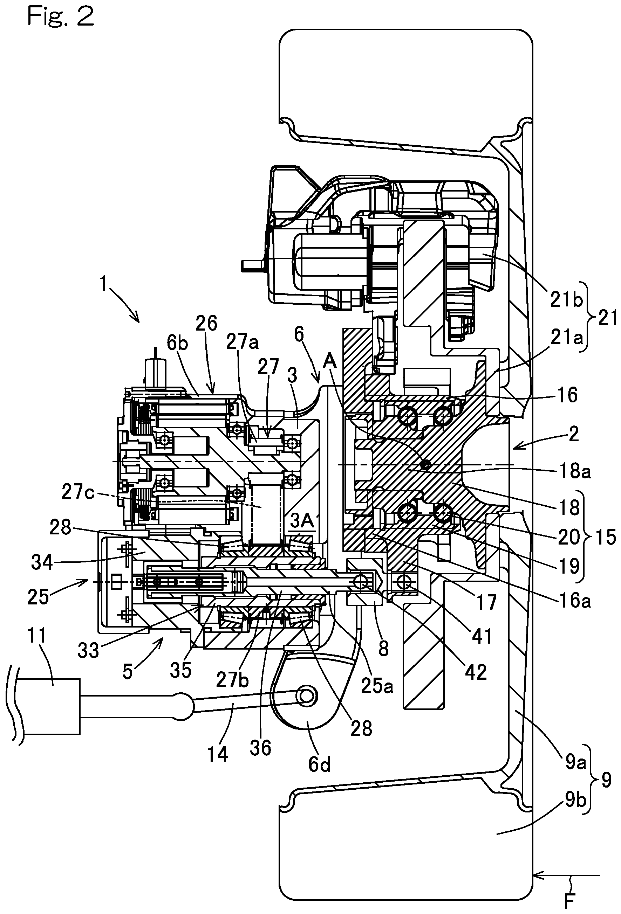

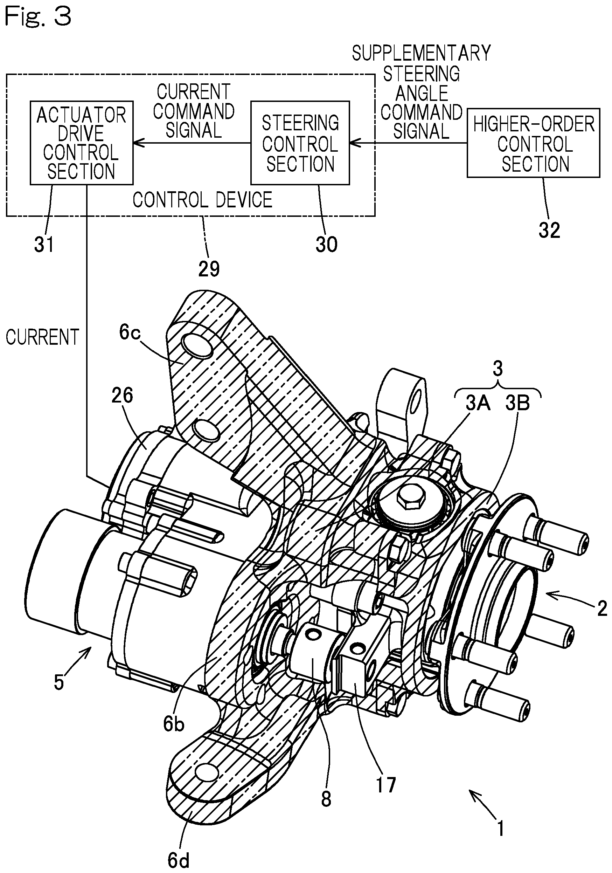

As shown in Fig. 2 and Fig. 3, the hub unit body 2 and the steering actuator 5 are coupled through a joint part 8. The joint part 8 is typically provided with a non-illustrated boot for protection against water and dust.

As shown in Fig. 1, the hub unit body 2 is supported by the unit support member 3 through the rotation-permitting support components 4, 4 disposed at two locations above and below the hub unit body such that the hub unit body 2 is rotatable about a turning axis A extending in a vertical direction. The turning axis A is different from a rotation axis O of a wheel 9 and from an axis of a king pin for main steering. In a general vehicle, a king pin angle is set in a range from 10 to 20 degrees in order to improve stability of the vehicle during driving straight. In contrast, the steering function equipped hub unit 1 of the present embodiment has the turning axis having a different inclination angle from the king pin angle. The wheel 9 includes a wheel body 9a and a tire 9b.

### Installation of Steering Function Equipped Hub Unit 1

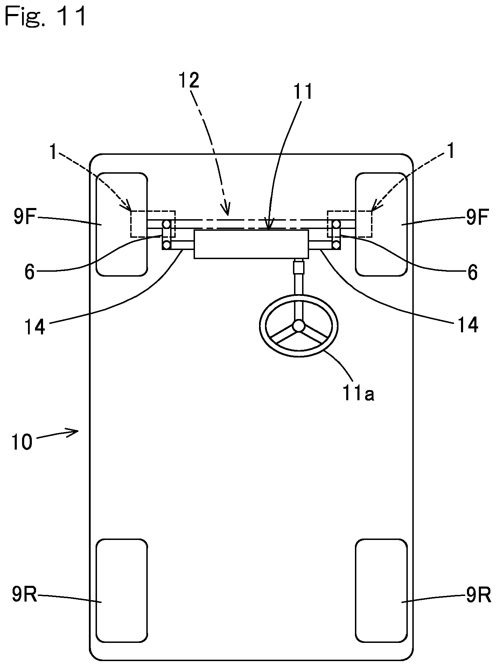

The steering function equipped hub unit 1 of the present embodiment is integrally provided to the knuckle 6 of a suspension system 12 as a mechanism configured to independently steer one of left and right wheels by a small angle (about ± 5 degrees) in addition to steering by the steered wheels, or specifically in addition to steering by the steering device 11 of front wheels 9F of the vehicle 10 as shown in Fig. 11.

As shown in Fig. 2 and Fig. 11, the steering device 11 is mounted in a vehicle body and is configured to operate in accordance with an operation of the steering wheel 11a by a driver or a command or the like from a non-illustrated autonomous travel device or operation support device. The steering device 11 has tie rods 14 configured to move back and forth and coupled to steering coupling parts 6d (which will be described later) of unit support members 3. The steering device 11 may be any type of steering devices, such as a rack and pinion type. The suspension system 12 may be, for example, a MacPherson type suspension mechanism in which shock absorbers are directly fixed to the knuckles 6, or may be a double wishbone type suspension mechanism, a multilink type suspension mechanism, or any other type of suspension mechanisms.

### Hub Unit Body 2

As shown in Fig. 1, the hub unit body 2 includes a hub bearing 15 for supporting the wheel 9, an annular member 16, and an arm part 17 (Fig. 3) which receives a steering force as described later.

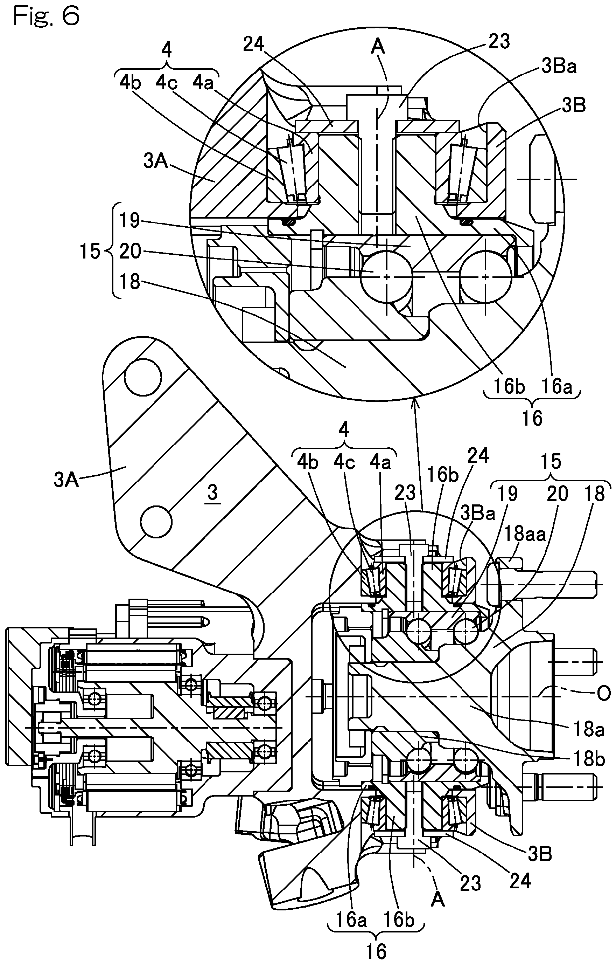

As shown in Fig. 6, the hub bearing 15 includes an inner ring 18, an outer ring 19, and rolling elements 20 such as balls interposed between the inner ring 18 and the outer ring 19. The hub bearing 15 serves to connect a vehicle-body-side member and the wheel 9 (Fig. 1).

In the illustrated example, the hub bearing 15 is an angular contact ball bearing in which the outer ring 19 serves as a fixed ring, and the inner ring 18 serves as a rotary ring, and the rolling elements 20 are disposed in double rows. The inner ring 18 includes: a hub ring part 18a having a hub flange 18aa and constituting an outboard-side raceway surface; and an inner ring part 18b constituting an inboard-side raceway surface. As shown in Fig. 1, the wheel body 9a of the wheel 9 is fixed to the hub flange 18aa by a bolt with a brake rotor 21a interposed therebetween. The inner ring 18 is configured to rotate about the rotation axis O.

As shown in Fig. 6, the annular member 16 includes: an annular part 16a fitted to an outer peripheral surface of the outer ring 19; and turning shaft parts 16b, 16b protruding upward and downward from an outer periphery of the annular part 16a, each of the turning shaft parts having a trunnion shaft shape. The turning shaft parts 16b, which are upper and lower mount shaft parts, are disposed coaxial with the turning axis A.

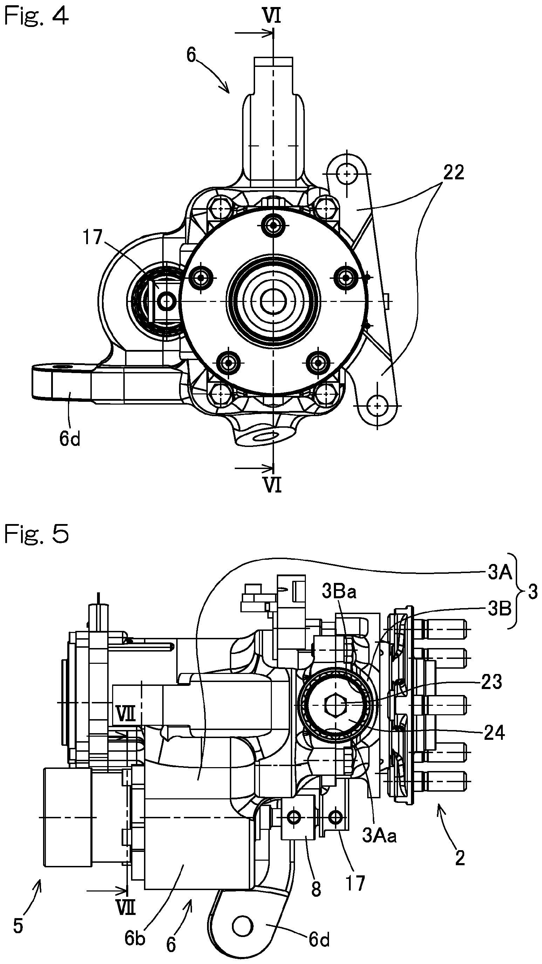

As shown in Fig. 2, a brake 21 includes the brake rotor 21a and a brake caliper 21b. The brake caliper 21b is mounted to brake caliper mount parts 22 (Fig. 4) which are formed integrally with the outer ring 19 so as to protrude in an arm-like manner at two upper and lower locations.

### Rotation-Permitting Support Components 4 and Unit Support Member 3

As shown in Fig. 6, each of the rotation-permitting support components 4 is constituted by a rolling bearing. In this example, a tapered roller bearing is used as the rolling bearing. The rolling bearing includes an inner ring 4a fitted to an outer periphery of one turning shaft part 16b; an outer ring 4b fitted to the unit support member 3; and a plurality of rolling elements 4c interposed between the inner ring 4a and the outer ring 4b.

The unit support member 3 includes a unit support member body 3A and a unit support member connecting body 3B. The unit support member connecting body 3B having a substantially ring shape is removably fixed to an outboard-side end of the unit support member body 3A. The unit support member connecting body 3B has an inboard-side lateral surface which has upper and lower parts each formed with a fitting-hole forming part 3Ba having a partial cylindrical inner surface.

As shown in Fig. 5 and Fig. 6, the unit support member body 3A has an outboard-side end which also has upper and lower parts each formed with a fitting-hole forming part 3Aa having a partial cylindrical inner surface. When the unit support member connecting body 3B is fixed to the outboard-side end of the unit support member body 3A, the fitting-hole forming parts 3Aa of the unit support member body 3A and the fitting-hole forming parts 3Ba of the unit support member connecting body 3B are brought together in the upper and lower parts and define fitting-holes each having a complete circumference. The outer rings 4b are fitted into the respective fitting-holes. In Fig. 3, the unit support member 3 is indicated by one-dot chain lines.

As shown in Fig. 6, each of the turning shaft parts 16b is formed with a female thread portion extending in a radial direction of the outer ring, and a bolt 23 is screwed into the female thread portion. With a disk-like pressing member 24 interposed between the bolt and an end face of the inner ring 4a, the bolt 23 screwed into the female thread portion applies a pressing force on the end face of the inner ring 4a so as to apply a preload to the corresponding rotation-permitting support component 4. Thus, the rigidity of each rotation-permitting support component 4 can be improved. It should be noted that the rolling bearing as the rotation-permitting support component 4 may be an angular contact ball bearing or a four-point contact ball bearing, instead of a tapered roller bearing. Even in such a case, the preload can be applied in the same manner as described above.

As shown in Fig. 1, the upper and lower turning shaft parts 16b, 16b are supported by the unit support member 3 through the rotation-permitting support components 4, and the respective rotation-permitting support components 4 are located within the wheel body 9a of the wheel 9. In this example, the respective rotation-permitting support components 4 are located at an intermediate position in a widthwise direction of the wheel body 9a, within the wheel body 9a.

As shown in Fig. 2, the arm part 17 serves as a point of action of a supplementary steering force applied to the outer ring 19 of the hub bearing 15 and is formed integrally with a part of an outer periphery of the annular member 16 in a protruding manner. The arm part 17 is rotatably coupled to the linear output part 25a of the steering actuator 5 through the joint part 8. Thus, when the linear output part 25a of the steering actuator 5 advances and retracts, the hub unit body 2 is rotated, or supplementarily steered, about the turning axis A.

### Steering Actuator 5

The steering actuator 5 as shown in Fig. 3 is configured to rotate the hub unit body 2 about the turning axis A (Fig. 1).

As shown in Fig. 2, the steering actuator 5 includes: a motor 26 as a rotational driving source; a reduction gear 27 configured to reduce a speed of rotation of the motor 26; and a linear motion mechanism 25 configured to convert a forward and reverse rotary output of the reduction gear 27 into a reciprocating linear motion of a linear output part 25a. The motor 26 may be, for example, a permanent magnet synchronous motor, or a direct current motor, or an induction motor.

### Reduction Gear 27

The reduction gear 27 may be a winding transmission mechanism such as a belt transmission mechanism, or a gear train or the like. In the example of Fig. 2, a belt transmission mechanism is used. The reduction gear 27 includes a driving pulley 27a, a driven pulley 27b, and a belt 27c. The driving pulley 27a is coupled to a motor shaft of the motor 26, and the driven pulley 27b is provided in the linear motion mechanism 25. The driven pulley 27b is disposed parallel to the motor shaft. A driving force of the motor 26 is transmitted from the driving pulley 27a to the driven pulley 27b through the belt 27c. The driving pulley 27a, the driven pulley 27b and the belt 27c constitute the reduction gear 27 of a winding type.

### Linear Motion Mechanism 25

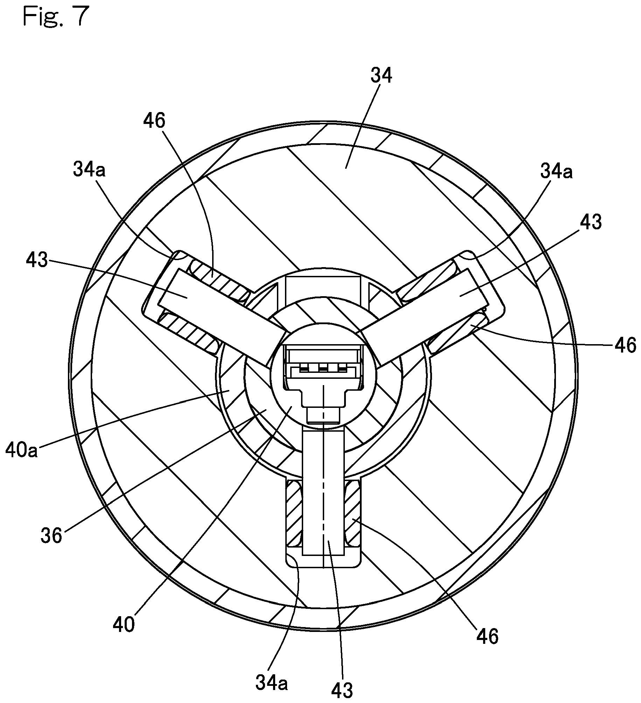

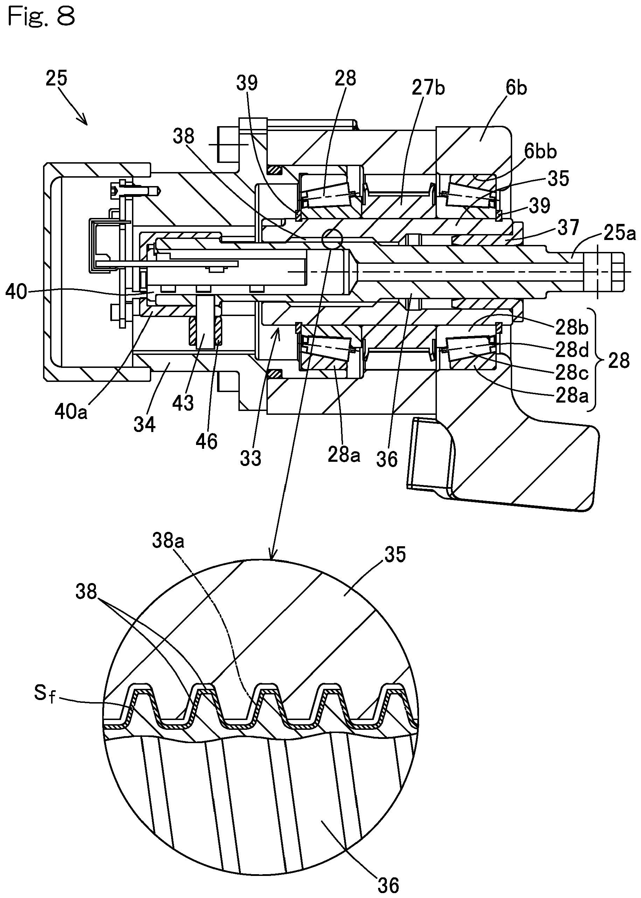

As shown in Fig. 2 and Fig. 8, the linear motion mechanism 25 may be a feed screw mechanism of a sliding screw type such as a trapezoidal screw and a triangular screw. In this example, a feed screw mechanism 33 with a trapezoidal sliding screw is used. The linear motion mechanism 25 includes the feed screw mechanism 33, rotation supporting bearings 28, rotation fixing members 43 (Fig. 7), and an actuator casing 34 which is a cover for covering these constituting components.

The feed screw mechanism 33 includes: a nut part 35 provided on an inner periphery of the driven pulley 27b; a threaded shaft 36 screwed onto an inner periphery of the nut part 35; and a sliding bearing 37. Grease is filled into an inside of the sliding screw. The nut part 35 and the threaded shaft 36 have screw grooves and screw threads constituting threaded parts 38 of the trapezoidal screw, so that an external force from the tire can be prevented from being inputted into the steering function equipped hub unit 1 to maintain the steering angle. The sliding bearing 37 is disposed at an axial end of the nut part 35, through which the threaded shaft 36 penetrates in a slidable manner. The sliding bearing 37 is configured to guide axial movement of the threaded shaft 36 and to prevent a radial force from being applied to the threaded parts 38 when an external force from the tire is inputted into the threaded shaft 36.

The rotation supporting bearings 28 rotatably support the feed screw mechanism 33. In this example, there are two tapered roller bearings as the rotation supporting bearings 28 disposed in a face-to-face arrangement, with the driven pulley 27b interposed therebetween. These rotation supporting bearings 28, 28 may be arranged either back-to-back or face-to-face. In view of ease of assembly and ease of preload adjustment by a shim or the like, a face-to-face arrangement is preferable.

Each of the rotation supporting bearings 28 includes an outer ring 28a as a fixed ring, an inner ring 28b as a rotary ring, a plurality of rolling elements 28c interposed between the inner ring 28b and the outer ring 28a, and a retainer 28d for retaining the rolling elements 28c. The respective inner rings 28b are fixedly fitted to an outer peripheral surface of the nut part 35 and are axially restricted by retaining rings 39, 39. The outer ring 28a of the rotation supporting bearing 28 on the right side (outboard side) in Fig. 8 is fixedly fitted into a fitting hole 6bb of a casing 6b, and the outer ring 28a of the rotation supporting bearing 28 on the left side (inboard side) in Fig. 8 is fixedly fitted to an inner peripheral surface of the actuator casing 34 on the outboard side. These rotation supporting bearings 28, 28 allow the driven pulley 27b and the nut part 35 to integrally rotate. It should be noted that the rotation supporting bearings 28 may be angular contact ball bearings. Even in such a case, the rotation supporting bearings 28, 28 may be arranged either back-to-back or face-to-face.

As shown in Fig. 7 and Fig. 8, the rotation fixing members 43 prevent rotation of the threaded shaft 36. An output rod 40 is coupled to an inboard-side end (rear end) of the threaded shaft 36 so as to be coaxial with the threaded shaft 36. The output rod 40 includes a threaded-shaft support member 40a having a substantially bottomed cylindrical shape and covering the inboard-side end of the threaded shaft 36. The threaded-shaft support member 40a is prevented from being rotated with respect to the actuator casing 34, together with the threaded shaft 36 by a plurality (three in this example) of rotation fixing members 43 each having a shaft shape and extending in a radial direction. These rotation fixing members 43 extend radially and are disposed at equal intervals in a circumferential direction. The rotation fixing members 43 may be, for example, pins or the like.

Each of the rotation fixing members 43 has a sliding bearing 46 fitted to its outer periphery. The actuator casing 34 is formed with guide grooves 34a extending in the axial direction and configured to guide the respective sliding bearings 46 on the inner peripheral surface of the actuator casing. Thus, the rotation fixing members 43 are caused to slide along the guide grooves 34a of the actuator casing 34 through the sliding bearings 46 such that the threaded shaft 36 of the sliding screw can be axially moved in a reciprocating manner. Since the rotation fixing members 43 are caused to slide with interposition of the sliding bearings 46, wear of sliding surfaces of the guide grooves 34a can be prevented. The sliding bearings 46 may be made of metals such as copper alloys or porous sintered alloys or resins such as fluororesins.

As shown in Fig. 2, the arm part 17 is coupled to the linear output part 25a at a tip end of the threaded shaft 36 through the joint part 8. The joint part 8 is rotatably coupled to the arm part 17 and the linear output part 25a through two pins 41, 42. Thus, the whole hub unit body 2 (Fig. 1) can be rotated about the supplementary turning axis A (Fig. 1) with respect to the knuckle 6 by back and forth movement of the threaded shaft 36.

### Force Acting on Steering Function Equipped Hub Unit 1

When the tire 9b or the wheel body 9a shown in Fig. 2 hits an obstacle on the road surface (e.g., when the vehicle runs upon a curbstone) or when a vehicle takes an excessively steep turn, an excessive impact force is applied to the steering function equipped hub unit 1. In particular, when a load acts in a direction of arrow F, the trapezoidal screw is required to support this force. Also during normal travel, external forces from the tire 9b due to vibration and turning are repeatedly inputted to the steering function equipped hub unit 1 from various directions.

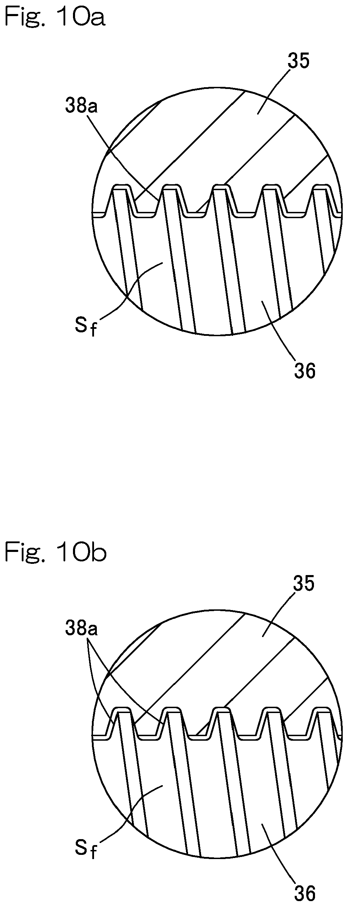

As shown in Fig. 2 and Fig. 8, a driving force of the motor 26 is transmitted to the nut part 35, which is a rotary member of the trapezoidal screw, via the reduction gear 27. When the nut part 35 rotates, the threaded shaft 36, which is a linear motion part of the trapezoidal screw, linearly moves toward e.g. the outboard side (toward the right in Fig. 10a) because the rotation fixing members 43 prevent rotation of the threaded shaft 36.

When an external force from the tire is inputted, the load is transmitted from the arm part 17 of the hub unit body 2 to the threaded shaft 36 via the joint part 8, so that the threaded shaft 36 is pulled toward e.g. the outboard side (toward the right in Fig. 10b), and rotation of the nut part 35 is suppressed due to friction between threaded surface 38a of the threaded shaft 36 and the nut part 35. Accordingly, the feed screw mechanism 33 of the linear motion mechanism 25 is required to have high durability as well as high fatigue strength.

### Surface Hardening etc.

Accordingly, the threaded shaft 36 and the nut part 35 of the trapezoidal screw are made of a thermal refining material of steel containing 0.35% to 0.55% of carbon (S35C material to S55C material), and a surface hardening layer Sf is provided on at least the threaded surface 38a of one of the threaded shaft 36 and the nut part 35. The thermal refining material of steel has a base material hardness (a hardness of the thermal refining material of steel without a surface hardening layer other than a hardening layer resulting from thermal refining) in a range of HRC 20 or higher to HRC 30 or lower.

In this example, a thermal refining material of high-carbon steel S45C is used as the material of the threaded shaft 36 and the nut part 35, and the surface hardening layer Sf is provided on the threaded surface 38a of the threaded shaft 36, the surface hardening layer being a layer formed by nitriding or salt bath soft nitriding. The surface hardening layer Sf has a surface hardness in a range of Hv 700 or higher to Hv 900 or lower. A hardening layer depth of the surface hardening layer Sf may preferably be suitably determined in view of necessary shock resistance and fatigue strength in accordance with the magnitudes of impact forces and repeated loads to be applied to the trapezoidal screw. It should be noted that the surface hardening layer Sf may be provided only on the threaded surface 38a, or the surface hardening layer Sf may be provided to the entire threaded shaft 36 including the threaded surface 38a.

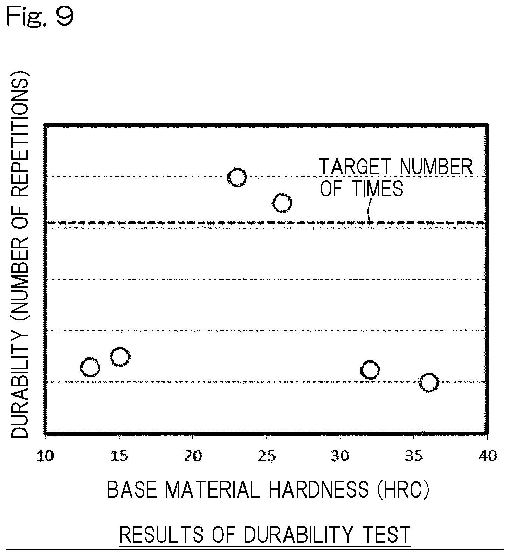

Fig. 9 shows results of a durability test for determining durability (number of repetitions) on thermal refining materials having different base material hardness, the thermal refining materials being prepared by thermal refining of steel S45C as the material of the nut part and the threaded shaft of the trapezoidal screw. The threaded shaft has been subjected to salt bath soft nitriding (surface hardness of Hv 800). The graph shows numbers of reciprocating motions (number of repetitions) plotted against base material hardness, the numbers indicating how many times the threaded shaft repeats reciprocating motions in the axial direction when abnormality occurs on the threaded surface of the trapezoidal screw, the reciprocating motions being caused by axial loads applied to the threaded shaft part to cause rotation of the nut part with a predefined load torque. Occurrence of abnormality on the threaded surface was determined by visual inspection or monitoring of an increase in load torque values etc.

According to the results of the durability test, the numbers of repetitions exceeded a target number of times, where the thermal refining material of steel had a base material hardness from HRC 20 or higher to HRC 30 or lower. The target number of times may be arbitrarily set in accordance with conditions of use of the feed screw mechanism.

As shown in Fig. 2, the steering actuator 5 including the motor 26, the reduction gear 27 and the linear motion mechanism 25 is assembled as a semi-assembled product and is removably mounted in a casing 6b by bolts or the like. Note that it is also possible to use a mechanism for directly transmitting the driving force of the motor 26 to the linear motion mechanism 25 without involving a reduction gear, in the steering actuator.

The casing 6b is integrally formed with the unit support member body 3A as a part of the unit support member 3. The casing 6b includes: a motor receiving part having a bottomed cylindrical shape and supporting the motor 26; and a linear motion mechanism receiving part supporting the linear motion mechanism 25. The motor receiving part is formed with a fitting hole for supporting the motor 26 at a predetermined position within the casing. The linear motion mechanism receiving part is formed with a fitting hole for supporting the linear motion mechanism 25 at a predetermined position within the casing and a through-hole for allowing the linear output part 25a to advance and retract therethrough.

As shown in Fig. 3, the unit support member body 3A includes: the casing 6b; a shock absorber mount part 6c to which a shock absorber is mounted; and a steering device connecting part 6d to which the steering device 11 (Fig. 2) is connected. The shock absorber mount part 6c and the steering device connecting part 6d are also integrally formed with the unit support member body 3A. The shock absorber mount part 6c is formed in a protruding manner on an upper portion of an outer surface part of the unit support member body 3A. The steering device connecting part 6d is formed in a protruding manner on a side part of the outer surface part of the unit support member body 3A.

### Effects and Advantages

According to the steering function equipped hub unit 1 as described above, the hub unit body 2 including the hub bearing 15 for supporting the wheel 9 can be freely rotated about the turning axis A by the steering actuator 5. This rotation takes place as supplementary steering in addition to steering in accordance with an operation of the steering wheel by a driver, i.e., in addition to rotation of the knuckle 6 about the king pin by the steering device 11 and as independent steering of a single wheel. The angles of supplementary steering of the left and right wheels 9, 9 may be varied to arbitrarily change toe angles of the left and right wheels 9, 9.

Thus, the steering function equipped hub unit 1 may be used in any of steered wheels such as front wheels and non-steered wheels such as rear wheels. Where the steering function equipped hub units are used in steered wheels, the hub units are mounted to members whose directions are changed by the steering device 11, so that they serve as mechanisms for turning the left and right wheels by a small angle in an independent manner or in associated manner, in addition to steering in accordance with an operation of the steering wheel by a driver. Supplementary steering only has to be performed by a small angle in order to improve motion performance of the vehicle, stability and safety of driving. A supplementarily steerable angle of ± 5 degrees or smaller is still sufficient. Angle control of supplementary steering is performed by controlling the steering actuator 5.

It is also possible to change a difference in the turning angles of the left and right wheels in accordance with a traveling speed during turning. For example, the steering geometries may be changed during driving in such a way that parallel geometry is assumed when turning in a high-speed range and Ackermann geometry is assumed when turning in a low-speed range. Thus, the wheel angles can be arbitrarily changed during driving, so that the vehicle can have improved motion performance and thus can drive stably and safely. By suitably changing the steering angles of the left and right steered wheels during turning, it is also possible to reduce a turning radius of the vehicle and to improve small-turn performance.

Further, even when driving straight, adjustment can be made by adapting the toe angles in accordance with a situation so as to reduce running resistance and thereby prevent deterioration of fuel economy during driving at low speed, and to ensure driving stability during driving at high speed.

Where the steering function equipped hub units 1 are applied to non-steered wheels (rear wheels 9R), and the steering angles of the rear wheels are set in phase with those of front wheels 9F during turning, a yaw generated during steering can be suppressed to enhance stability of the vehicle. Even when driving straight, the left and right toe angles can be adjusted independently to ensure stability of driving.

Thus, in order to control a behavior of the vehicle by changing the angles of the wheels, it is necessary to accurately control the wheel angles and to reduce the size of the hub unit such that it can be installed within a limited space inside a wheel while improving the rigidity of the entire steering function equipped hub unit 1. However, reduction of the size would lead to a reduced distance between the turning axis A to the attachment point of the joint part, so that a greater load would be applied to the trapezoidal screw when a large external force impulsively acts from the tire.

Even during normal travel, external forces from the tire due to vibration and turning are repeatedly inputted to the trapezoidal screw, so that abnormality may occur in the trapezoidal screw.

Accordingly, in the steering function equipped hub unit 1 of the present embodiment, the threaded shaft 36 and the nut part 35 of the trapezoidal screw are made of a thermal refining material of steel containing 0.35% to 0.55% of carbon, and the surface hardening layer Sf is provided on at least the threaded surface 38a of one of the threaded shaft 36 and the nut part 35 as described above. Therefore, the hardness of the threaded surface 38a can be improved to enhance wear resistance without increasing the size of the feed screw mechanism 33. Further, surface hardening of the threaded surface 38a can improve strength of the surface where a fatigue crack is initiated, and introduce a large compressive residual stress on the surface, so that fatigue strength can be improved. This makes it possible to achieve high shock resistance against an impulsive external force from the tire due to an obstacle or the like on the road surface as well as high fatigue strength against external forces repeatedly inputted from the tire.

Thus, it is possible to reduce the size of the steering function equipped hub unit 1 such that a part of the steering function equipped hub unit 1 is accommodated within a limited space inside a wheel, and to ensure durability, strength, and reliability of the feed screw mechanism 33 of the linear motion mechanism 25.

Since the surface hardening layer Sf is a layer formed on the threaded surface 38a by nitriding or salt bath soft nitriding, the nitrided product has improved wear resistance thanks to hardness of the surface layer on the threaded surface 38a. Further, since the nitrided product has been processed at lower processing temperature than that of a surface induction hardened product or the like, the nitrided product has a smaller absolute value of thermal expansion and has smaller deformation because the nitriding process does not involve transformation of steel. Thus, dimensional accuracy of the threaded surface 38a can be maintained at a high level. Further, since the surface hardening layer Sf is provided on at least the threaded surface 38a of only one of the nut part 35 and the threaded shaft 36, and the surface hardening layer Sf has a surface hardness of Hv 700 or higher to Hv 900 or lower, a suitable difference in hardness is generated between the threaded surface of the nut part and the threaded surface of the threaded shaft, so that durability of the feed screw mechanism can be surely improved.

The rotation-permitting support components 4 are located within the wheel body 9a of the wheel 9, so that a distance between the turning axis A and a center part of a supporting surface of the wheel 9 can be reduced or eliminated. Thus, an extremely large force is not necessary to rotate the hub unit body 2, so that the size of the steering actuator 5 can be reduced. This makes it possible to surely reduce the weight of the entire steering function equipped hub unit 1.

It should be noted that in the steering function equipped hub unit 1 of the present embodiment, the surface hardening layer Sf may be formed on the threaded surface 38a by electroless nickel plating. In this case, dimensional accuracy of the threaded surface 38a can be maintained at a high level because the electroless nickel plated layer has a uniform thickness on the threaded surface 38a.

The surface hardening layer Sf may also be formed on the threaded surface 38a by phosphate coating. In this case, dimensional accuracy of the threaded surface 38a can be maintained at a high level, and lubricity of the threaded surface 38a is improved because the coating can be formed by reaction of raw materials per se.

Further, the surface hardening layer Sf may be provided on both the threaded shaft 36 and the nut part 35.

### Application to Non-Steered Wheels

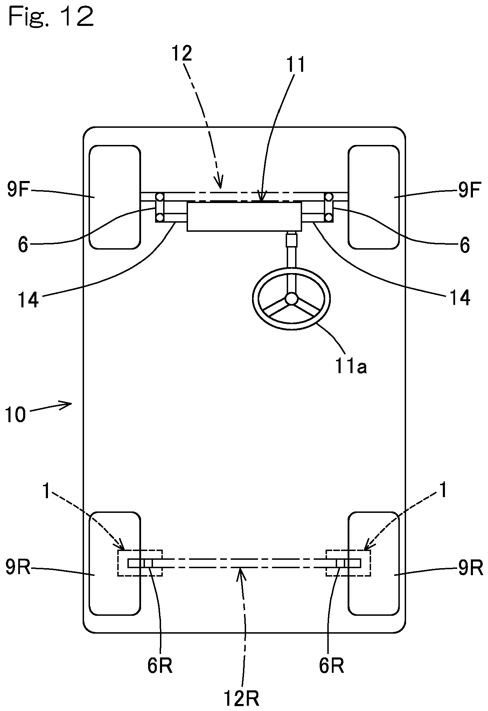

The steering function equipped hub units 1 may be used in non-steered wheels. For example, as shown in Fig. 12, the hub units may be provided to chassis frame components 6R, which are wheel bearing installation parts, of a suspension system 12R supporting rear wheels 9R in a front-wheel-steering vehicle 10 in order to steer the rear wheels.

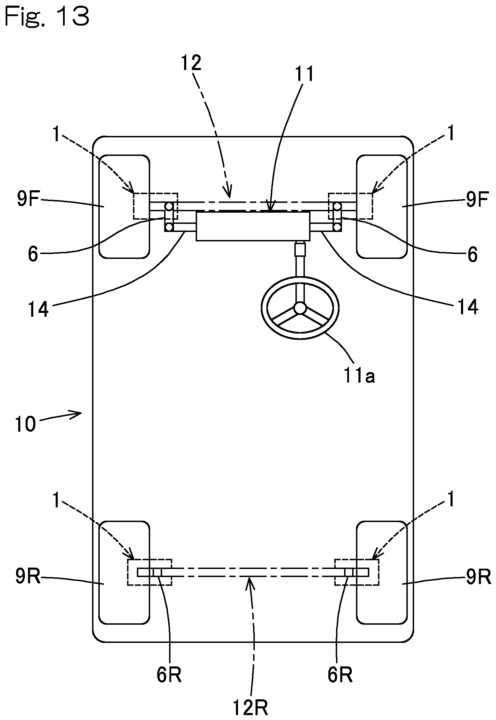

As shown in Fig. 13, the steering function equipped hub units 1 may be used in all of the left and right front wheels 9F, 9F serving as steered wheels and the left and right rear wheels 9R, 9R serving as non-steered wheels.

### Steering System

As shown in Fig. 3, a steering system including the steering function equipped hub unit 1 according to the first embodiment includes a control device 29 configured to control the steering actuator 5 of the steering function equipped hub unit 1. The control device 29 includes a steering control section 30 and an actuator drive control section 31. The steering control section 30 is configured to output a current command signal in accordance with a supplementary steering angle command signal given by a higher-order control section 32.

The higher-order control section 32 is a control unit superordinate to the steering control section 30. For example, the higher-order control section 32 may be an electric control unit (or a vehicle control unit, abbreviated as VCU) for performing general control of a vehicle. The actuator drive control section 31 is configured to output a current in accordance with the current command signal inputted from the steering control section 30 to control the steering actuator 5. Specifically, the actuator drive control section 31 is constituted as, for example, a non-illustrated half-bridge circuit including a switching element in order to control power to be supplied to a coil of the motor 26 and is configured to performs PWM control for determining a motor applied voltage in accordance with an ON-OFF duty cycle of the switching element. This makes it possible to change the angle of the wheel by a small angle in addition to steering in accordance with an operation of the steering wheel by a driver. Even when driving straight, the toe angles can be adjusted in accordance with a situation such as a speed or the like.

In this steering system, the steering actuators 5, 5 may be controlled in accordance with a command or the like from a non-illustrated autonomous travel device or operation support device, instead of an operation of the steering wheel by a driver.

Although the present invention has been fully described in connection with the preferred examples thereof with reference to the accompanying drawings, those skilled in the art will readily conceive numerous changes and modifications within the scope of present invention upon reading the present specification. Accordingly, such changes and modifications are to be construed as included in the scope of the present invention as defined in the claims.

### [Reference Numerals]

- 1: steering function equipped hub unit
- 2: hub unit body
- 3: unit support member
- 5: steering actuator
- 6: knuckle (chassis frame component)
- 9: wheel
- 10: vehicle
- 12, 12R: suspension system
- 15: hub bearing
- 25: linear motion mechanism
- 26: motor (rotational driving source)
- 33: feed screw mechanism
- 35: nut part
- 36: threaded shaft
- 38a: threaded surface
- Sf: surface hardening layer

## Claims

1. A steering function equipped hub unit comprising:
a hub unit body having a hub bearing configured to support a wheel;
a unit support member configured to be provided to a chassis frame component of a suspension system and to support the hub unit body such that the hub unit body is rotatable about a turning axis extending in a vertical direction; and
a steering actuator configured to rotate the hub unit body about the turning axis, wherein
the steering actuator includes a rotational driving source and a linear motion mechanism configured to convert a rotary output from the rotational driving source into a linear motion,
the linear motion mechanism includes a feed screw mechanism of a sliding screw type including a nut part and a threaded shaft, and
a surface hardening layer is provided on at least a threaded surface of one or both of the nut part and the threaded shaft.

2. The steering function equipped hub unit as claimed in claim 1, wherein the nut part and the threaded shaft are made of a thermal refining material of steel containing 0.35% to 0.55% of carbon.

3. The steering function equipped hub unit as claimed in claim 2, wherein the thermal refining material of steel without the surface hardening layer provided thereon has a hardness in a range of HRC 20 to HRC 30.

4. The steering function equipped hub unit as claimed in any one of claims 1 to 3, wherein the surface hardening layer is formed on the threaded surface by nitriding or salt bath soft nitriding.

5. The steering function equipped hub unit as claimed in any one of claims 1 to 3, wherein the surface hardening layer is formed on the threaded surface by electroless nickel plating.

6. The steering function equipped hub unit as claimed in any one of claims 1 to 3, wherein the surface hardening layer is formed on the threaded surface by phosphate coating.

7. The steering function equipped hub unit as claimed in any one of claims 1 to 6, wherein the surface hardening layer is provided on at least the threaded surface of only one of the nut part and the threaded shaft, and the surface hardening layer has a surface hardness in a range of Hv 700 to Hv 900.

8. A vehicle comprising steering function equipped hub units as claimed in any one of claims 1 to 7, the steering function equipped hub units supporting front wheels, or rear wheels, or all of the front wheels and the rear wheels.
